# EUROPEAN PATENT SPECIFICATION

(11) **EP 4 431 327 B1**
(45) Date of publication and mention of the grant of the patent: **25.02.2026**
(21) Application number: 22910506.9
(22) Date of filing: 29.09.2022
(51) Int. Cl.: B60K 8/00, B60K 1/04, B60K 11/04, B60K 15/063, H01M 8/00, H01M 8/04014

(54) **COOLING DEVICE FOR FUEL CELL VEHICLE**
KÜHLVORRICHTUNG FÜR EIN BRENNSTOFFZELLENFAHRZEUG
DISPOSITIF DE REFROIDISSEMENT POUR UN VÉHICULE À PILE À COMBUSTIBLE

(30) Priority: 22.12.2021 JP 2021207723
(43) Date of publication of application: 18.09.2024
(73) Proprietor: Daimler Truck AG, 70771 Leinfelden-Echterdingen (DE)
(72) Inventor: AMARASINGHE, Suwin Indula, Kawasaki-shi, Kanagawa 211-8522 (JP)
(74) Representative: Hofstetter, Schurack & Partner
(86) International application number: PCT/JP2022/036425
(87) International publication number: WO 2023/119780

(56) References cited:
- WO-A1-2015/137869
- CN-B- 110 001 370
- DE-A1- 102017 002 999
- JP-A- 2014 054 873
- JP-A- 2019 147 500
- JP-A- 2019 147 500
- JP-A- 2021 019 369
- JP-A- 2021 075 076
- JP-A- 2022 165 028
- US-A1- 2015 325 891
- US-A1- 2020 231 212
- US-A1- 2020 247 234

## Description

### [Technical Field]

The present invention relates to a cooling device for a fuel cell vehicle that includes a cab and a chassis frame.

### [Background Art]

Conventionally known fuel cell systems generate electric power by using a chemical reaction between hydrogen and oxygen (air). Recently, from a viewpoint of reducing environmental loads, the fuel cell systems have been developed also in the field of commercial vehicles such as trucks with cabs and chassis frames.

The fuel cell systems applied to the commercial vehicles require large output according to the weight of the commercial vehicles, and therefore, tend to be large in size. As a result, the radiators for cooling the fuel cells require high cooling performance, and thus, also tend to be large in size.

Regarding this, Patent Document 1 discloses a technique that secures a cooling ability for a fuel cell by using multiple radiators in a fuel cell freight vehicle. In this technique, the multiple radiators are arranged below the cab together with the fuel cell.

Also, patent Document 2 discloses a fuel cell vehicle having a body with a frame structure including a side rails and including a hydrogen tank and a secondary battery.

### [Citation List]

### [Patent Literature]

[Patent Document 1] Japanese Laid-Open Patent Publication No. 2020-059299
[Patent Document 2] Japanese Laid-Open Patent Publication No. 2019-147500

### [Summary of Invention]

### [Technical Problems]

However, in the space below the cab, a steering device and the like are generally disposed in addition to the fuel cell, so that it is difficult to secure a large mounting space for the radiator, and it is particularly difficult to install a large radiator that achieves sufficient cooling performance. Hence, the conventional technique disclosed in Patent Document 1 has room for improvement in securing both mountability and cooling performance of the radiator.

The present invention has been devised in view of the above-mentioned problems, and one of the objects of the present invention is to secure both mountability and cooling performance in a cooling device for a fuel cell vehicle.

### [Solution to Problems]

The present invention has been made to solve at least a part of the above problems, and can be realized as the following aspects or application examples.
(1) A cooling device for a fuel cell vehicle according to the present application example is for the fuel cell vehicle that includes a cab and a chassis frame and that drives a motor for traveling with electric power of a fuel cell, and includes: a hydrogen gas reservoir that is installed on a rear side of the cab and outside in a vehicle width direction of the chassis frame, and that stores hydrogen gas to be supplied to the fuel cell; and a heat exchanger that is installed outside in the vehicle width direction of the hydrogen gas reservoir and along the hydrogen gas reservoir, and that exchanges heat between outside air and coolant configured to cool at least the fuel cell.
   According to the present application example, the heat exchanger can be mounted by utilizing a dead space that exists outside in the vehicle width direction of the hydrogen gas reservoir. Thus, as compared with the conventional case where the heat exchanger (radiator) is installed below the cab, a large mounting space can be secured for the heat exchanger, which enables installation of a large heat exchanger that achieves sufficient cooling performance. Further, according to the heat exchanger installed outside in the vehicle width direction of the hydrogen gas reservoir, the oncoming wind to the fuel cell vehicle can be directly introduced into the heat exchanger, so that the cooling performance of the heat exchanger can be enhanced. Therefore, it is possible to ensure both the mountability and the cooling performance in the cooling device for the fuel cell vehicle.
(2) The cooling device for the fuel cell vehicle according to the present application example may include an outside air guide that introduces the outside air to the heat exchanger.
   According to such a configuration, since the outside air is introduced to the heat exchanger by the outside air guide, it is possible to increase the efficiency of the heat exchange between the coolant and the outside air in the heat exchanger. As a result, the cooling performance of the heat exchanger is elevated, so that the cooling target device including the fuel cell can be cooled more efficiently. Therefore, the reliability of the fuel cell vehicle can be increased.
(3) **In** the cooling device for the fuel cell vehicle according to the present application example: the heat exchanger may be disposed with a space from the hydrogen gas reservoir; and the outside air guide may include a casing that forms a passage of the outside air between the hydrogen gas reservoir and the heat exchanger.
   According to such a configuration, since the outside air flows through the passage formed by the casing, the flow rate of the outside air that passes through the heat exchanger can be increased. As a result, the cooling performance of the heat exchanger is elevated, so that the cooling target device including the fuel cell can be cooled more efficiently.
(4) **In** the cooling device for the fuel cell vehicle according to the present application example, the outside air guide may include a fan that generates a flow of the outside air that passes through the heat exchanger.
   According to such a configuration, it is possible to actively introduce the outside air to the heat exchanger by the effect of the fan. This allows the outside air to flow through the heat exchanger even when the fuel cell vehicle is stationary, for example. As a result, the cooling performance of the heat exchanger can be further enhanced, so that the cooling target device including the fuel cell can be cooled further effectively.
(5) **In** the cooling device for the fuel cell vehicle according to the present application example, the heat exchanger may include a first heat exchanger that exchanges heat between the outside air and first coolant configured to cool the fuel cell, a second heat exchanger that exchanges heat between the outside air and second coolant different from the first coolant and configured to cool a high-voltage battery that stores electric power of the fuel cell.
   According to such a configuration, the first coolant and the second coolant are cooled by the outside air independently of each other in the first heat exchanger and the second heat exchanger, respectively. Thus, as compared with the case where the first coolant and the second coolant are cooled together in a single heat exchanger, the cooling efficiency can be increased for each of the fuel cell and the high-voltage battery. Further, since the respective sizes (cooling performance) of the first heat exchanger and the second heat exchanger can be individually set to match the requirements of the fuel cell and the high-voltage battery, each of the fuel cell and the high-voltage battery can be cooled more efficiently.
(6) **In** the cooling device for the fuel cell vehicle according to the present application example: the hydrogen gas reservoir may include a first hydrogen gas reservoir provided outside in the vehicle width direction of a first one of a pair of side rails each extending in a vehicle length direction in the chassis frame forming a ladder frame structure, and a second hydrogen gas reservoir provided outside in the vehicle width direction of a second one of the pair of side rails; the first heat exchanger may be installed outside in the vehicle width direction of the first hydrogen gas reservoir and along the first hydrogen gas reservoir; and the second heat exchanger may be installed outside in the vehicle width direction of the second hydrogen gas reservoir and along the second hydrogen gas reservoir.
   According to such a configuration, the first heat exchanger and the second heat exchanger can be mounted by utilizing two dead spaces that exist outside in the vehicle width direction of the first hydrogen gas reservoir and the second hydrogen gas reservoir, respectively. Thus, a large mounting space can be secured for both the first heat exchanger and the second heat exchanger, which enables installation of a large first heat exchanger and a large second heat exchanger that achieve sufficient cooling performance. Therefore, the cooling performance can be secured in each of the first heat exchanger and the second heat exchanger.
(7) **In** the cooling device for the fuel cell vehicle according to the present application example, the heat exchanger may include a third heat exchanger that exchanges heat between the outside air and third coolant different from the first coolant and the second coolant and used for cooling the motor.
   According to such a configuration, the first coolant, the second coolant, and the third coolant are cooled by the outside air independently of each other in the first heat exchanger, the second heat exchanger, and the third heat exchanger, respectively. Thus, as compared with the case where at least two of the first coolant, the second coolant, and the third coolant are cooled together in a single heat exchanger, the cooling efficiency can be increased for each of the fuel cell, the high-voltage battery, and the motor. Further, since the respective sizes (cooling performance) of the first heat exchanger, the second heat exchanger, and the third heat exchanger can be individually set according to the requirements of the fuel cell, the high-voltage battery, and the motor, each of the fuel cell, the high-voltage battery, and the motor can be cooled more efficiently.
(8) **In** the cooling device for the fuel cell vehicle according to the present application example, the third heat exchanger may be installed outside in the vehicle width direction of the second hydrogen gas reservoir and along the second hydrogen gas reservoir.
   According to such a configuration, the first heat exchanger, the second heat exchanger, and the third heat exchanger can be mounted by utilizing the two dead spaces that exist outside in the vehicle width direction of the first hydrogen gas reservoir and the second hydrogen gas reservoir. Further, by arranging the first heat exchanger for cooling the fuel cell in a space different from the second heat exchanger and the third heat exchanger, the size (cooling performance) of the first heat exchanger can be set larger than the sizes of the second heat exchanger and the third heat exchanger. This enables the first heat exchanger to more efficiently cool the fuel cell which requires more cooling than the high-voltage battery or the motor does.
(9) **In** the cooling device for the fuel cell vehicle according to the present application example, the heat exchanger may be supported by a bracket that fixes the hydrogen gas reservoir to the chassis frame.

According to such a configuration, the heat exchanger can be mounted by utilizing the bracket that fixes the hydrogen gas reservoir. Thus, as compared with the case where a dedicated bracket is provided to the heat exchanger, the number of components can be reduced and the space can be saved.

### [Advantageous Effect of Invention]

According to the present invention, in the cooling device for a fuel cell vehicle, it is possible to secure both the mountability and the cooling performance.

### [Brief Description of Drawings]

[FIG. 1] FIG. 1 is a schematic top view of a fuel cell vehicle to which a cooling device according to a first embodiment is applied.
[FIG. 2] FIG. 2 is a perspective view illustrating a part of the cooling device of FIG. 1.
[FIG. 3] FIG. 3 is a partial side view of the cooling device of FIG. 1 when seen from outside in a vehicle width direction.
[FIG. 4] FIG. 4 is a cross-sectional view schematically illustrating a main part of the fuel cell vehicle of FIG.1.
[FIG. 5] FIG. 5 is a perspective view (a diagram corresponding to FIG. 2) illustrating a cooling device according to a modification of the first embodiment.
[FIG. 6] FIG. 6 is a cross-sectional view (a diagram corresponding to FIG. 4) schematically illustrating a main part of a fuel cell vehicle to which the cooling device of FIG. 5 is applied.
[FIG. 7] FIG. 7 is a schematic top view of a fuel cell vehicle to which a cooling device according to a second embodiment is applied.
[FIG. 8] FIG. 8 is a cross-sectional view schematically illustrating a main part of the fuel cell vehicle of FIG. 7, in which a brace is disassembled.
[FIG. 9] FIG. 9 is a perspective view of a pedestrian guard provided in the fuel cell vehicle of FIG. 7.
[FIG. 10] FIG. 10 is a schematic top view of a fuel cell vehicle to which a cooling device according to a third embodiment is applied.
[FIG. 11] FIG. 11 is a perspective view illustrating a part of the cooling device of FIG. 10.
[FIG. 12] FIG. 12 is a cross-sectional view schematically illustrating a main part of the fuel cell vehicle of FIG. 10.
[FIG. 13] FIG. 13 is a cross-sectional view (a diagram corresponding to FIG. 12) illustrating a cooling device according to a first modification of the third embodiment.
[FIG. 14] FIG. 14 is a cross-sectional view (a diagram corresponding to FIG. 12) illustrating a cooling device according to a second modification of the third embodiment.

### [Description of Embodiments]

Embodiments of the present invention will now be described with reference to drawings.

### --1. First Embodiment--

### --1-1. Configuration--

### <Fuel Cell Vehicle>

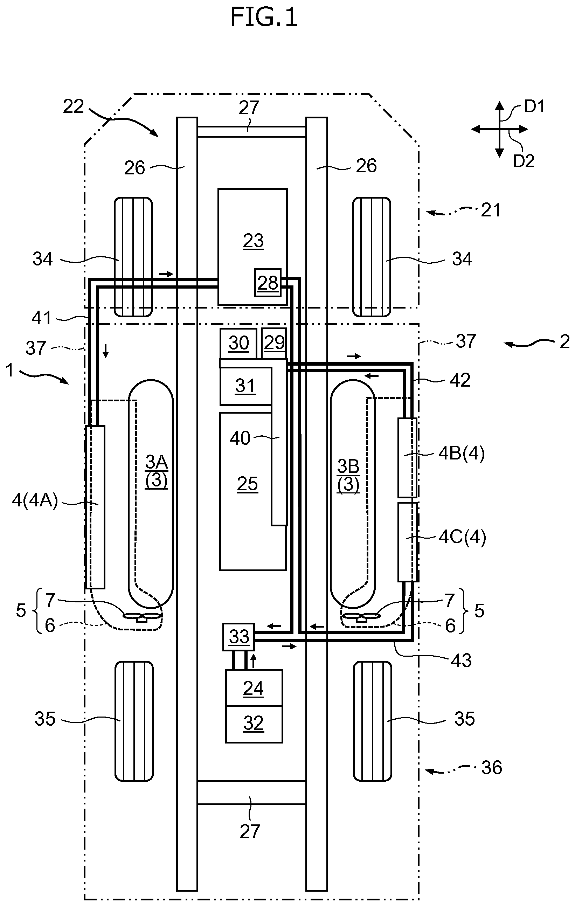

As illustrated in FIG. 1, a cooling device 1 for a fuel cell vehicle according to the first embodiment is applied to a fuel cell vehicle 2 which is a truck. Hereinafter, the "cooling device 1 for a fuel cell vehicle" is also simply referred to as the "cooling device 1", and the "fuel cell vehicle 2" is also simply referred to as the "vehicle 2". The vehicle 2 includes a cab 21 and a chassis frame 22, and drives a motor 24 for traveling with electric power of a fuel cell 23. The vehicle 2 of the present embodiment further includes a high-voltage battery 25 that stores the electric power of the fuel cell 23, and drives the motor 24 with the electric power stored in the high-voltage battery 25. In the drawings, both the cab 21 and a mounted component 36 to be described later are indicated by two-dot chain lines.

The chassis frame 22 of the present embodiment has a ladder frame structure. Specifically, the chassis frame 22 includes: a pair of side rails 26 spaced apart from each other in a vehicle width direction (left and right direction) D2 and each extending in a vehicle length direction (front and rear direction) D1; and multiple cross members 27 (only two of them are illustrated in FIG. 1) each of which connects the side rails 26 and extends in the vehicle width direction D2, and forms a ladder shape. The front portion of the chassis frame 22 supports the cab 21 from below. On the other hand, the central portion and the rear portion in the vehicle length direction D1 of the chassis frame 22 support the mounted component 36 disposed on the rear side of the cab 21, from below. The mounted component 36 is, for example, a cargo box, and is also referred to as a body.

The fuel cell 23 is a device that generates electric power by a chemical reaction between hydrogen and oxygen (air). The fuel cell 23 is disposed, for example, under the cab 21 and between the pair of side rails 26. Various auxiliary devices 28 (hereinafter, also referred to as FC auxiliary devices 28) such as valves and compressors relating to the fuel cell 23 are also provided together with the fuel cell 23.

The high-voltage battery 25 is disposed, for example, on the rear side of the cab 21 and the fuel cell 23 and between the pair of side rails 26. On the rear side of the fuel cell 23 and in front of the high-voltage battery 25, provided are various electric auxiliary devices 29 (hereinafter, also referred to as E auxiliary devices 29), a heater 30, and a DC/DC converter 31. The E auxiliary devices 29 are specifically water pumps, compressors, and/or valves. The heater 30 is a device for warming the high-voltage battery 25. The DC/DC converter 31 is a device that raises and lowers voltage of direct current. All of the E auxiliary devices 29, the heater 30, and the DC/DC converter 31 are disposed between the pair of side rails 26.

The motor 24 is disposed, for example, on the rear side of the high-voltage battery 25 and between the pair of side rails 26. The motor 24 is modularized with a non-illustrated inverter. On the rear side of the motor 24, provided is an axle 32 including a non-illustrated reduction gear. In addition, an oil cooler 33 is disposed between the high-voltage battery 25 and the motor 24. The oil cooler 33 is a device that cools oil for cooling and lubricating the motor 24 and the axle 32. The oil cooler 33 of the present embodiment is of a water-cooled type which exchanges heat between the oil and cooling water. It should be noted that, if the motor 24 and the axle 32 are cooled by the cooling water instead of the oil, the oil cooler 33 is omitted.

### <Cooling Apparatus>

The cooling device 1 includes: a hydrogen gas reservoir 3 installed on the rear side of the cab 21 and outside in the vehicle width direction D2 of the chassis frame 22; and a heat exchanger 4 installed outside in the vehicle width direction D2 of the hydrogen gas reservoir 3 and along the hydrogen gas reservoir 3. The present embodiment illustrates the hydrogen gas reservoir 3 that includes two tanks consisting of a first tank (first hydrogen gas reservoir) 3A and a second tank (second hydrogen gas reservoir) 3B.

The first tank 3A is provided outside in the vehicle width direction D2 of a first one (on the left in FIG. 1) of the pair of side rails 26 each extending in the vehicle length direction D1 in the chassis frame 22 forming the ladder frame structure. The second tank 3B is provided outside in the vehicle width direction D2 of a second one (on the right in FIG.1) of the side rails 26. As such, in the present embodiment, the first tank 3A is disposed on the left side of the side rail 26 on the left, and the second tank 3B is disposed on the right side of the side rail 26 on the right.

The hydrogen gas reservoir 3 (each of the first tank 3A and the second tank 3B) is a container that stores the hydrogen gas to be supplied to the fuel cell 23, is in a shape of, for example, a cylinder whose both ends are closed by hemispherical faces, and is mounted in a posture such that the axis of the cylinder extends along the vehicle length direction D1. The present embodiment illustrates the first tank 3A and the second tank 3B that have the shapes identical to each other. However, the shape of the hydrogen gas reservoir 3 is not limited to the above example, and the two tanks 3A, 3B may have shapes different from each other.

The hydrogen gas reservoir 3 is disposed in a space between a front wheel 34 and a rear wheel 35 of the vehicle 2. In addition, from the viewpoint of safety, the hydrogen gas reservoir 3 is disposed inside in the vehicle width direction D2 from an outer face 37 (e.g., the outermost face of the mounted component 36) of the vehicle 2 by at least a predetermined dimension. Therefore, a space of at least the predetermined dimension is provided outside in the vehicle width direction D2 of the hydrogen gas reservoir 3.

The heat exchanger 4 is disposed in the space of at least the predetermined dimension provided outside in the vehicle width direction D2 of the hydrogen gas reservoir 3 as described above. In other words, the heat exchanger 4 is mounted by utilizing a dead space that exists outside in the vehicle width direction D2 of the hydrogen gas reservoir 3. The heat exchanger 4 of the present embodiment is provided with a space from the hydrogen gas reservoir 3 in the vehicle width direction D2.

The heat exchanger 4 is a device that exchanges heat between outside air (e.g., oncoming wind) and coolant that cools at least the fuel cell 23. The present embodiment illustrates the heat exchanger 4 including three radiators consisting of: a first radiator (first heat exchanger) 4A for cooling the fuel cell 23; a second radiator (second heat exchanger) 4B for cooling the high-voltage battery 25; and a third radiator (third heat exchanger) 4C for cooling the motor 24. Each of the three radiators 4A, 4B, 4C is a heat exchanging device of an air-cooled type that cools cooling water serving as the coolant with the outside air. Each of the radiators 4A, 4B, 4C of the present embodiment is in a thin box shape, and is disposed in a posture that a side face (the face through which the outside air passes) having the largest area extends along at least the vehicle length direction D1.

The first radiator 4A exchanges heat between the outside air and first coolant (coolant) 41 that cools the fuel cell 23. The first radiator 4A of the present embodiment is a cooling device dedicated to the fuel cell 23. Therefore, the first coolant 41 circulates through the fuel cell 23 and the first radiator 4A, and after cooling only the fuel cell 23, is cooled again by the first radiator 4A. The first radiator 4A is installed outside in the vehicle width direction D2 of the first tank 3A and along the first tank 3A. The dimension in the vehicle length direction D1 of the first radiator 4A is set, for example, to be substantially the same as that of a cylindrical portion of the first tank 3A.

The second radiator 4B exchanges heat between the outside air and second coolant (coolant) 42 that is different from the first coolant 41 and that cools the high-voltage battery 25. The second radiator 4B of the present embodiment is a cooling device for a water cooling part 40 that passes through not only the high-voltage battery 25 but also the E auxiliary devices 29, the heater 30, and the DC/DC converter 31. To be more specific, the second coolant 42 circulates the water cooling part 40 and the second radiator 4B, and after cooling the high-voltage battery 25, the E auxiliary devices 29, the heater 30, and the DC/DC converter 31 in the water cooling part 40, is cooled again by the second radiator 4B. The second radiator 4B is installed outside in the vehicle width direction D2 of the second tank 3B and along the second tank 3B.

The third radiator 4C exchanges heat between the outside air and third coolant (coolant) 43 that is different from the first coolant 41 and the second coolant 42 and that is used for cooling the motor 24. The third radiator 4C of the present embodiment is a cooling device for the FC auxiliary devices 28 and the oil that cools the motor 24. Therefore, the third coolant 43 circulates the FC auxiliary devices 28, the oil cooler 33, and the third radiator 4C, and after cooling the FC auxiliary devices 28 and then cooling the oil for cooling the motor 24 in the oil cooler 33, is cooled again by the third radiator 4C. The third radiator 4C is installed outside in the vehicle width direction D2 of the second tank 3B and along the second tank 3B, together with the second radiator 4B.

FIG. 1 depicts an example in which the second radiator 4B is installed in front of the third radiator 4C. Each dimension in the vehicle length direction D1 of the second radiator 4B and the third radiator 4C is set, for example, to be substantially half of that of a cylindrical portion of the second tank 3B.

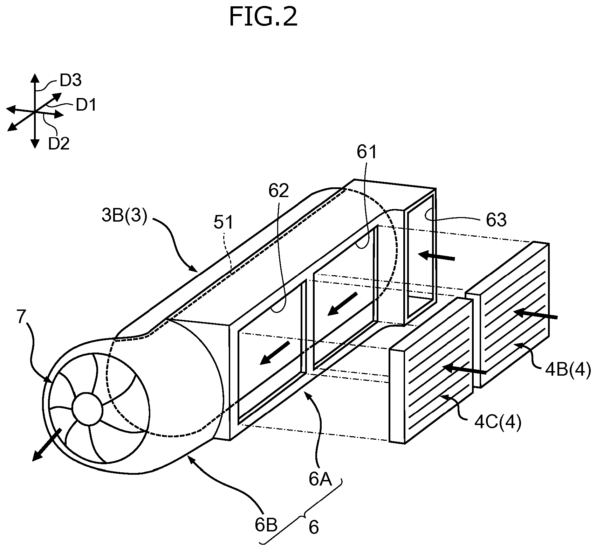

Although FIG. 1 illustrates the radiators 4A, 4B, 4C that each have an inlet and an outlet of the coolant provided on the same side (front end or rear end), the layouts of the inlet and the outlet of the coolant in the heat exchanger 4 can be appropriately modified. For example, the first radiator 4A may have the inlet and the outlet of the coolant provided on the front end and the rear end thereof, respectively. As such, if the inlet and the outlet of the coolant are provided on both sides of the vehicle length direction D1 of the heat exchanger 4, the heat exchanger 4 can have a suppressed dimension in a vehicle height direction (up and down direction) D3 (see FIGS. 2 to 4).

The cooling device 1 of the present embodiment includes an outside air guide 5 that introduces the outside air to the heat exchanger 4. The outside air guide 5 includes: a casing 6 that forms a passage of the outside air between the hydrogen gas reservoir 3 and the heat exchanger 4; and a fan 7 that generates a flow of the outside air that passes through the heat exchanger 4. The present embodiment illustrates two casings 6 respectively attached to the two tanks 3A, 3B, and fans 7 respectively disposed at rear ends of the casings 6 and on the rear side of the tanks 3A, 3B. FIG. 1 and FIGS. 7 and 10 to be described later each depict the casings 6 by broken lines so that the heat exchanger 4 and the like are easily viewable.

Hereinafter, referring to FIGS. 2 to 4, the casing 6 attached to the second tank 3B will be described as an example. As illustrated in FIG. 2, the casing 6 includes: a body 6A provided so as to cover the second tank 3B (hydrogen gas reservoir 3) from outside in the vehicle width direction D2; and a duct 6B provided so as to cover the second tank 3B from the rear side. The casing 6 is, for example, plastic, and has an edge airtightly fitted to an outer face of the second tank 3B via a rubber 51. The casing 6 forms, in cooperation with part of the outer face of the second tank 3B, the passage for the outside air that passes through the second radiator 4B and the third radiator 4C.

The body 6A is in a substantial box shape. On a side face that faces outside in the vehicle width direction D2 in the body 6A, formed are openings 61 and 62 for fitting the second radiator 4B and the third radiator 4C, respectively. The second radiator 4B of the present embodiment is fitted into the opening 61 in a posture that the side face (the face through which the outside air passes) having the largest area extends along the vehicle length direction D1 and the vehicle height direction D3. Similarly, the third radiator 4C is fitted into the opening 62 in a posture that the side face (the face through which the outside air passes) having the largest area extends along the vehicle length direction D1 and the vehicle height direction D3. On the front end of the body 6A, a scoop 63 for the outside air is formed toward the outside in the vehicle width direction D2.

The duct 6B is a portion to which the fan 7 is attached, and is disposed adjacently to a hemispherical rear end portion of the second tank 3B. The fan 7 attached to the duct 6B generates a flow of air from the front to the rear in the casing 6. As illustrated by thick arrows in FIG. 2, the outside air is drawn into the casing 6 through the scoop 63 and the opening 61, 62 (the second radiator 4B, the third radiator 4C), and after flowing to the rear along the outer face of the second tank 3B, passes through the fan 7 to be discharged to the rear of the casing 6.

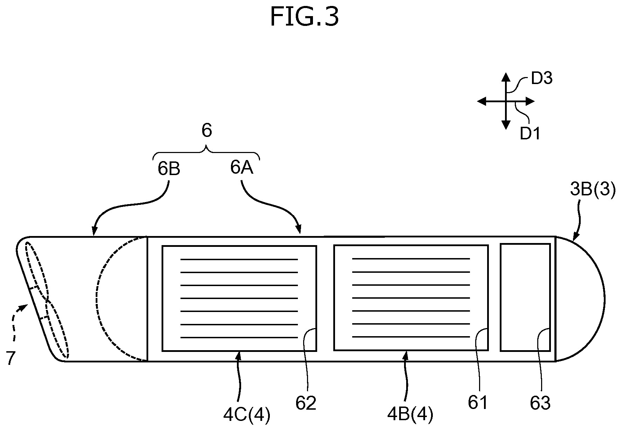

As illustrated in FIG. 3, the fan 7 is installed in an inclined posture with respect to the vehicle height direction D3. Accordingly, as compared with a fan 7 installed along the vehicle height direction D3, the diameter of the fan 7 can be enlarged within the casing 6. This contributes to an increase in a flow rate of the outside air that passes through the second radiator 4B and the third radiator 4C.

Alternatively, the fan 7 may be disposed in front of the hydrogen gas reservoir 3. However, various components for refilling hydrogen are often disposed in front of the hydrogen gas reservoir 3. Thus, disposing the fan 7 on the rear side of the hydrogen gas reservoir 3 makes it easy to secure a mounting space for the various components for refilling hydrogen in front of the hydrogen gas reservoir 3.

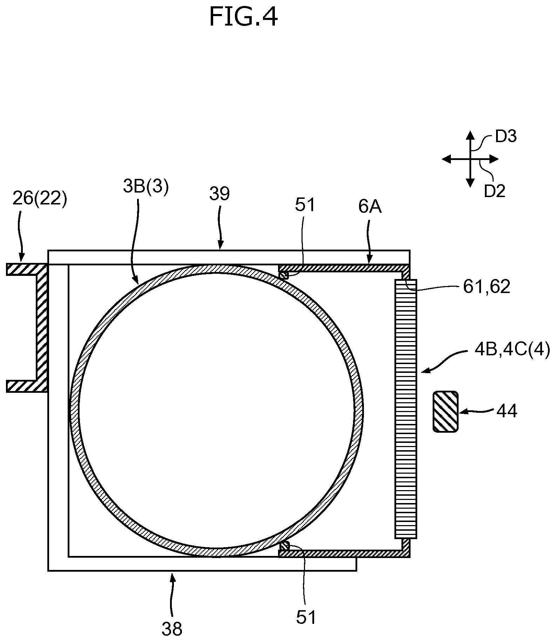

As illustrated in FIG. 4, the casing 6, the second radiator 4B, and the third radiator 4C are supported by brackets 38 and 39 that fix the second tank 3B to the chassis frame 22. The brackets 38 and 39 are, specifically, a mount 38 that supports the second tank 3B from below and a rod-shaped stay 39 disposed on or above the second tank 3B. The mount 38 is fixed to the side rail 26. The stay 39 is fixed to the side rail 26 or the mount 38.

On the outside in the vehicle width direction D2 of the second tank 3B, disposed is a side crash guard 44 for receiving a colliding object coming from outside in the vehicle width direction D2. The side crash guard 44 is formed, for example, in a rod shape that extends in the vehicle length direction D1. FIG. 4 illustrates the side crash guard 44 disposed outside in the vehicle width direction D2 of the casing 6, the second radiator 4B, and the third radiator 4C. It should be noted that the casing 6 attached to the first tank 3A is configured similarly to the casing 6 attached to the second tank 3B, except that only one opening is provided for fitting the first radiator 4A.

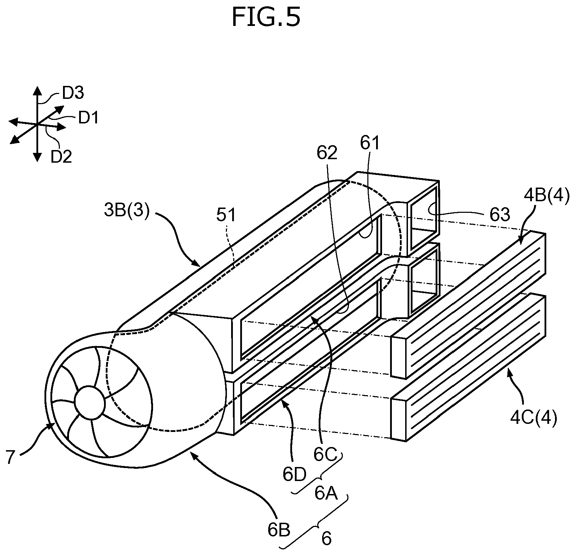

However, the shape of the casing 6 is not limited to the above example. The body 6A of the casing 6 may omit the scoop 63 for the outside air. Further, as illustrated in FIG. 5, the body 6A of the casing 6 may be divided into two parts consisting of an upper body 6C and a lower body 6D. In this case, the opening 61 for fitting the second radiator 4B may be provided on a side face of one of the upper body 6C and the lower body 6D, and the opening 62 for fitting the third radiator 4C may be formed on a side face of the other one of the upper body 6C and the lower body 6D. FIG. 5 illustrates the body 6A in which the opening 61 for the second radiator 4B is provided on the side face of the upper body 6C and the opening 62 for the third radiator 4C is provided on the side face of the lower body 6D.

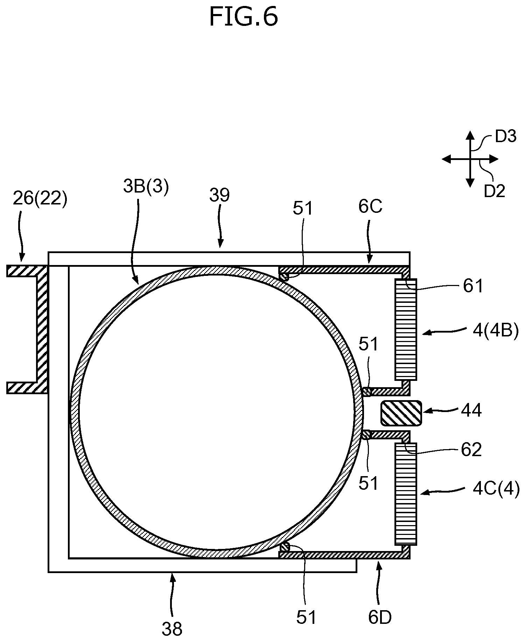

In the case where the body 6A is divided into two parts of the upper body 6C and the lower body 6D, as illustrated in FIG. 6, the side crash guard 44 may be disposed between the upper body 6C and the lower body 6D. According to such a configuration, the side crash guard 44 can be arranged by utilizing a space between the upper body 6C and the lower body 6D, so that the side crash guard 44 can be suppressed from projecting outside in the vehicle width direction D2.

### --1-2. Actions and Effects--

(1) According to the cooling device 1, since the heat exchanger 4 is installed outside in the vehicle width direction D2 of the hydrogen gas reservoir 3 and along the hydrogen gas reservoir 3, the heat exchanger 4 can be mounted by utilizing the dead space that exists outside in the vehicle width direction D2 of the hydrogen gas reservoir 3. Thus, as compared with the conventional case where the heat exchanger (radiator) is installed below the cab, a large mounting space can be secured for the heat exchanger 4, which enables installation of a large heat exchanger 4 that achieves sufficient cooling performance. Further, according to the heat exchanger 4 installed outside in the vehicle width direction D2 of the hydrogen gas reservoir 3, the oncoming wind to the vehicle 2 can be directly introduced into the heat exchanger 4, so that the cooling performance of the heat exchanger 4 can be enhanced. Therefore, according to the cooling device 1, it is possible to ensure both mountability and cooling performance.
   Further, by installing the heat exchanger 4 in the dead space described above, as compared with a case where the heat exchanger 4 is arranged in a line with the hydrogen gas reservoir 3 along the vehicle length direction D1, the mounting space for the hydrogen gas reservoir 3 can be enlarged. As a result, the storage amount of hydrogen gas in the hydrogen gas reservoir 3 can be increased.
(2) If there is provided the outside air guide 5 that introduces the outside air to the heat exchanger 4, since the outside air is introduced to the heat exchanger 4 by the outside air guide 5, it is possible to increase the efficiency of the heat exchange between the coolant and the outside air in the heat exchanger 4. As a result, the cooling performance of the heat exchanger 4 is elevated, so that the cooling target device including the fuel cell 23 can be cooled more efficiently. Therefore, the reliability of the vehicle 2 can be increased.
(3) If the outside air guide 5 includes the casing 6 that forms the passage of the outside air between the heat exchanger 4 and the hydrogen gas reservoir 3, since the outside air flows through the passage formed by the casing 6, the flow rate of the outside air that passes through the heat exchanger 4 can be increased. As a result, the cooling performance of the heat exchanger 4 is elevated, so that the cooling target device including the fuel cell 23 can be cooled more efficiently.
(4) If the outside air guide 5 includes the fan 7 that generates the flow of the outside air that passes through the heat exchanger 4, it is possible to actively introduce the outside air to the heat exchanger 4 by the effect of the fan 7. This allows the outside air to flow through the heat exchanger 4 even when the vehicle 2 is stationary, for example. As a result, the cooling performance of the heat exchanger 4 can be further enhanced, so that the cooling target device including the fuel cell 23 can be cooled further effectively.
(5) If the heat exchanger 4 includes: the first radiator 4A that exchanges heat between the outside air and the first coolant 41 configured to cool the fuel cell 23; and the second radiator 4B that exchanges heat between the outside air and the second coolant 42 configured to cool the high-voltage battery 25, the first coolant 41 and the second coolant 42 are cooled by the outside air independently of each other in the first radiator 4A and the second radiator 4B, respectively. Thus, as compared with the case where the first coolant 41 and the second coolant 42 are cooled together in a single radiator, the cooling efficiency can be increased for each of the fuel cell 23 and the high-voltage battery 25. Further, since the respective sizes (cooling performance) of the first radiator 4A and the second radiator 4B can be individually set to match the requirements of the fuel cell 23 and the high-voltage battery 25, each of the fuel cell 23 and the high-voltage battery 25 can be cooled more efficiently.
(6) If the first radiator 4A and the second radiator 4B are respectively installed outside in the vehicle width direction D2 of the first tank 3A and the second tank 3B provided outside in the vehicle width direction D2 of the pair of side rails 26, the two radiators 4A, 4B can be mounted by utilizing two dead spaces that exist outside in the vehicle width direction D2 of the two tanks 3A, 3B. Thus, a large mounting space can be secured for both of the two radiators 4A, 4B, which enables installation of a large first radiator 4A and a large second radiator 4B that achieve sufficient cooling performance. Therefore, the cooling performance can be secured in each of the first radiator 4A and the second radiator 4B.
(7) If the heat exchanger 4 includes the third radiator 4C that exchanges heat between the outside air and the third coolant 43 used for cooling the motor 24, the first coolant 41, the second coolant 42, and the third coolant 43 are cooled by the outside air independently of each other in the three radiators 4A, 4B, 4C. Thus, as compared with the case where at least two of the first coolant 41, the second coolant 42, and the third coolant 43 are cooled together in a single radiator, the cooling efficiency can be increased for each of the fuel cell 23, the high-voltage battery 25, and the motor 24. Further, since the respective sizes (cooling performance) of the three radiators 4A, 4B, 4C can be individually set according to the requirements of the fuel cell 23, the high-voltage battery 25, and the motor 24, the fuel cell 23, the high-voltage battery 25, and the motor 24 can be cooled more efficiently.
(8) If the first radiator 4A is installed outside in the vehicle width direction D2 of the first tank 3A, and the second radiator 4B and the third radiator 4C are installed outside in the vehicle width direction D2 of the second tank 3B, three radiators 4A, 4B, 4C can be mounted by utilizing two dead spaces that exist outside in the vehicle width direction D2 of the two tanks 3A, 3B. Further, by arranging the first radiator 4A for cooling the fuel cell 23 in a space different from the other two radiators 4B, 4C, the size (cooling performance) of the first radiator 4A can be set larger than the sizes of the other two radiators 4B, 4C. This enables the first radiator 4A to more efficiently cool the fuel cell 23 which requires more cooling than the high-voltage battery 25 or the motor 24.
(9) If the heat exchanger 4 is supported by the brackets 38 and 39 that fix the hydrogen gas reservoir 3 to the chassis frame 22, the heat exchanger 4 can be mounted by utilizing the brackets 38 and 39 that fix the hydrogen gas reservoir 3. Thus, as compared with the case where a dedicated bracket is provided to the heat exchanger 4, the number of components can be reduced and the space can be saved.
(10) If the fan 7 is installed on the rear side of the hydrogen gas reservoir 3, as compared with a case where the fan 7 is installed between the hydrogen gas reservoir 3 and the heat exchanger 4, the limitation of the mounting space for the fan 7 can be alleviated. As a result, the fan 7 can be enlarged. Further, if the duct 6B to which the fan 7 is attached in the casing 6 is disposed adjacent to the hemispherical portion of the hydrogen gas reservoir 3, as compared with a case where the duct 6B is disposed adjacent to the cylindrical portion of the hydrogen gas reservoir 3, the duct 6B can be suppressed from projecting in the vehicle width direction D2. Therefore, while saving space of the cooling device 1 in the vehicle width direction D2, the mounting space for the fan 7 can be secured.
(11) If the scoop 63 for the outside air and the fan 7 are provided at both ends of the vehicle length direction D1 of the casing 6, the outside air easily flows along the vehicle length direction D1 in the casing 6, so that the air pressure in the casing 6 can be equalized over the vehicle length direction D1. This can smooth the flow of the outside air in the casing 6.
(12) If the fan 7 generates the flow of air from the front to the rear, the direction of the flow of air generated by the fan 7 coincides with that of the oncoming wind of the vehicle 2, so that the oncoming wind can be smoothly introduced to the heat exchanger 4. This also makes it easy to secure the flow rate of the outside air that passes through the heat exchanger 4, which can enhance the cooling performance of the heat exchanger 4.
(13) If the fan 7 is installed in the inclined posture with respect to the vehicle height direction D3, as compared with a fan 7 installed in a posture along the vehicle height direction D3, the diameter of the fan 7 can be secured larger within the casing 6. This also makes it easy to secure the flow rate of the outside air that passes through the heat exchanger 4, which can enhance the cooling performance of the heat exchanger 4.

### --2. Second Embodiment--

### --2-1. Configuration--

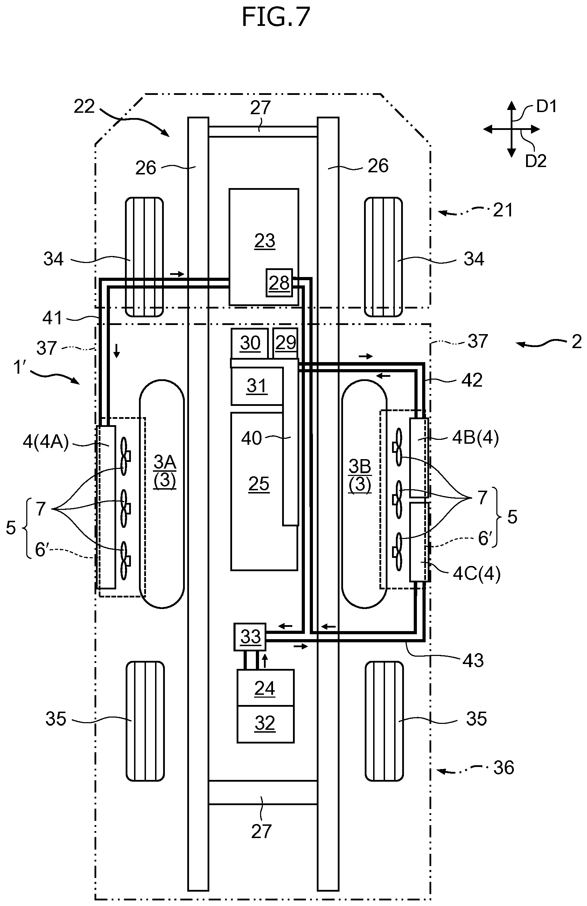

As illustrated in FIG. 7, a cooling device 1' according to the second embodiment differs from the cooling device 1 according to the first embodiment in the shape of casings 6' in the outside air guide 5 and the arrangement of the fans 7. Hereinafter, the same or corresponding elements as those described in the first embodiment are denoted by the same reference numerals, and a repetitive description thereof will be omitted.

In the outside air guide 5 of the present embodiment, two casings 6' are respectively attached to the two tanks 3A, 3B, and the fans 7 which each generate the flow of the outside air that passes through the heat exchanger 4 are disposed in the space between the heat exchanger 4 and the hydrogen gas reservoir 3. The fans 7 are each installed in a posture that faces the heat exchanger 4. Thus, the fans 7 each generate the flow of the outside air perpendicular to the side face having the largest area in the heat exchanger 4.

FIG. 7 illustrates an example in which three fans 7 are arranged side by side along the vehicle length direction D1 in the space between the first radiator 4A and the first tank 3A, and another three fans 7 are arranged side by side along the vehicle length direction D1 between the second tank 3B and a set of the second radiator 4B and the third radiator 4C. However, the number of fans 7 is not limited to this.

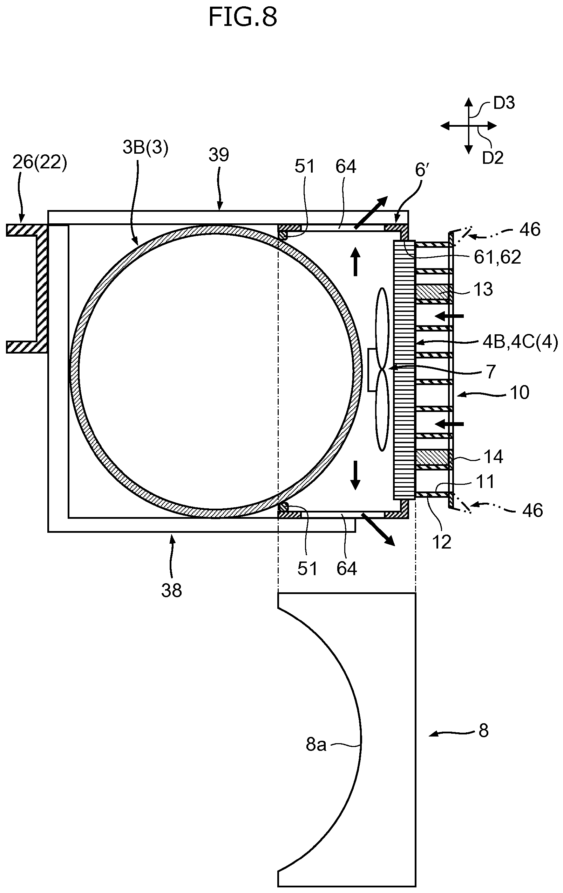

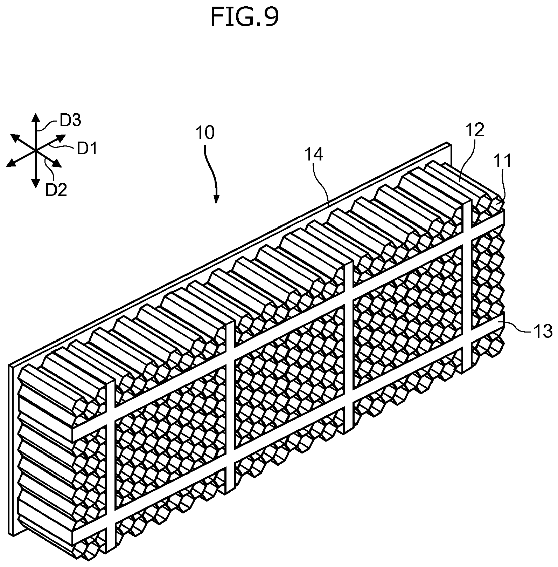

Hereinafter, referring to FIGS. 8 and 9, the casing 6' attached to the second tank 3B will be described as an example. As illustrated in FIG. 8, the casing 6' of the present embodiment is provided, in a manner similar to that of the body 6A described in the first embodiment, so as to cover the second tank 3B (hydrogen gas reservoir 3) from outside in the vehicle width direction D2, and is in a substantial box shape. On a side face that faces outside in the vehicle width direction D2 in the casing 6', formed are the openings 61 and 62 for fitting the second radiator 4B and the third radiator 4C, respectively. In addition, outlets 64 for the outside air are formed on an upper face and a lower face of the casing 6'.

The fans 7 of the present embodiment are disposed between the side face on which the openings 61 and 62 are formed in the casing 6' and the outer face of the second tank 3B (hydrogen gas reservoir 3). That is, all of the fans 7 are arranged within the casing 6'. The fans 7 of the present embodiment generate a flow of air from the outside to the inside in the vehicle width direction D2 (from outside in the vehicle width direction D2 of the heat exchanger 4 toward the hydrogen gas reservoir 3).

Also in this embodiment, the casing 6', the second radiator 4B, and the third radiator 4C are supported by the brackets 38 and 39 that fix the second tank 3B to the chassis frame 22. The casing 6' of the present embodiment may also be divided into the upper body 6C and the lower body 6D as illustrated in FIGS. 5 and 6 in a manner similar to the body 6A of the casing 6 described in the first embodiment.

On the outside in the vehicle width direction D2 of the second radiator 4B and the third radiator 4C, disposed is a pedestrian guard 10 for protecting pedestrians that may collide from outside in the vehicle width direction D2. In order to allow the outside air to flow into the second radiator 4B and the third radiator 4C, the pedestrian guard 10 has a large number of holes 11 that each penetrate through in the vehicle width direction D2. As illustrated in FIG. 9, the pedestrian guard 10 includes, for example, a large number of cylinders 12 each in a hexagonal tubular shape, a grid-shaped frame 13 that supports the cylinders 12, and a panel 14 coupled to one end of each cylinder 12. The panel 14 has a large number of through-holes communicating with hollows of the cylinders 12. As such, by the hollows of the cylinders 12 and the through-holes of the panel 14 communicating with each other, the above-mentioned holes 11 penetrating in the vehicle width direction D2 are formed.

As illustrated in FIG. 8, the pedestrian guard 10 is mounted on the vehicle 2 in a posture that the panel 14 is positioned outside in the vehicle width direction D2 of the cylinders 12. As illustrated by thick arrows in FIG. 8, by the effect of the fan 7, the outside air flows from the outside to the inside in the vehicle width direction D2 through the holes 11 of the pedestrian guard 10, and passes through the second radiator 4B and the third radiator 4C. Then, the outside air flows upward and downward along the outer face of the second tank 3B to be discharged out of the vehicle 2 through the outlets 64 of the casing 6'.

As illustrated in a disassembled manner in FIG. 8, between the pedestrian guard 10 and the second tank 3B, disposed is a brace 8 that transmits impact force input to the pedestrian guard 10 to the second tank 3B. The brace 8 is a plate-like member that extends along the vehicle width direction D2 and the vehicle height direction D3, and has a cutout 8a conforming to the outer face of the second tank 3B. The brace 8 is arranged in contact with both the pedestrian guard 10 and the second tank 3B, and on the outside (in front or on the rear side) of the casing 6'. Preferably, multiple braces 8 are arranged with intervals between one another in the vehicle length direction D1.

As illustrated by two-dot chain lines in FIG. 8, an upper end and a lower end of the pedestrian guard 10 may be provided with deflectors 46 for controlling the flow of the outside air. Here, the deflectors 46 with triangular sections are illustrated as an example. If such deflectors 46 are provided, the outside air discharged to the outside in the vehicle width direction D2 from the outlets 64 can flow obliquely upward or obliquely downward, so that swirls (vortex flow) of the outside air can be suppressed.

### --2-2. Actions and Effects--

According to the cooling device 1' of the present embodiment, since the fans 7 are disposed in the space between the heat exchanger 4 and the hydrogen gas reservoir 3, the flow of the outside air that passes through the heat exchanger 4 can be efficiently generated by the fans 7. As a result, the cooling performance of the heat exchanger 4 enhances, which achieves efficient cooling of the cooling target device including the fuel cell 23. Further, since the mounting space (the duct 6B of the first embodiment) for the fans 7 are not necessary on the front end or the rear end of the casing 6', it is possible to compactify the casing 6' and to enlarge the heat exchanger 4 in the vehicle length direction D1.

If the pedestrian guard 10 is installed outside in the vehicle width direction D2 of the heat exchanger 4, even without the side crash guard 44 illustrated in the first embodiment, protectability can be ensured for pedestrians who may collide with the heat exchanger 4 from outside in the vehicle width direction D2. Further, according to the pedestrian guard 10 provided with a large number of holes 11, while the protectability for the pedestrians is ensured as described above, the outside air can pass the heat exchanger 4 through the holes 11, and thus, the cooling performance of the heat exchanger 4 can be maintained.

If the deflectors 46 are provided at the upper and lower ends of the pedestrian guard 10, the swirl of the outside air discharged from the casing 6' is suppressed, so that the outside air discharged from the casing 6' can be inhibited from flowing again into the heat exchanger 4. This helps new and cold outside air flow into the heat exchanger 4, which enhances the cooling performance of the heat exchanger 4.

If the brace 8 is disposed between the pedestrian guard 10 and the hydrogen gas reservoir 3, the impact force input to the pedestrian guard 10 can be transmitted to the hydrogen gas reservoir 3 through the brace 8. As a result, the impact force is received by the hydrogen gas reservoir 3, which has a relatively high intensity, and therefore, the heat exchanger 4 can be protected from the impact force.

In addition, according to the cooling device 1' of the present embodiment, the same actions and effects can be obtained from the same configuration as the cooling device 1 of the first embodiment.

### --3. Third Embodiment--

### --3-1. Configuration--

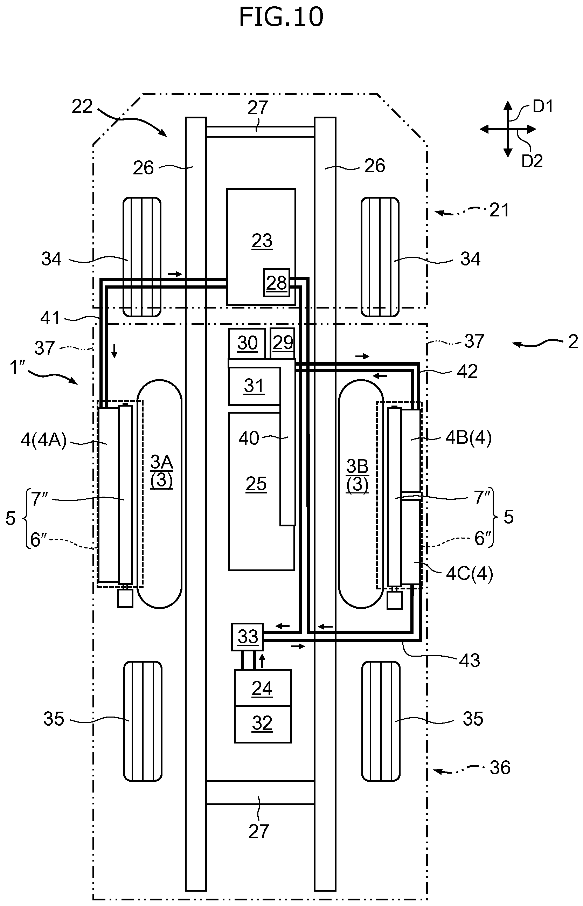

As illustrated in FIG. 10, a cooling device 1" according to the third embodiment differs from the cooling device 1 according to the first embodiment in the shape of the heat exchanger 4 and the structures of casings 6" and fans 7" in the outside air guide 5. In the present embodiment, the heat exchanger 4 and the fans 7" are arranged so as to be offset from each other in the vehicle height direction D3. In the outside air guide 5 of the present embodiment, two casings 6" are arranged along and outside in the vehicle width direction D2 of the respective two tanks 3A, 3B, and the fans 7" each of which generates a flow of the outside air that passes through the heat exchanger 4 are also arranged along and outside in the vehicle width direction D2 of the respective two tanks 3A, 3B.

FIG. 10 depicts an example in which one fan 7" is arranged for each of the tanks 3A, 3B. However, the number of fans 7" is not limited to this example, and two or more fans 7" may be arranged in a line along the vehicle length direction D1 for each of the tanks 3A, 3B.

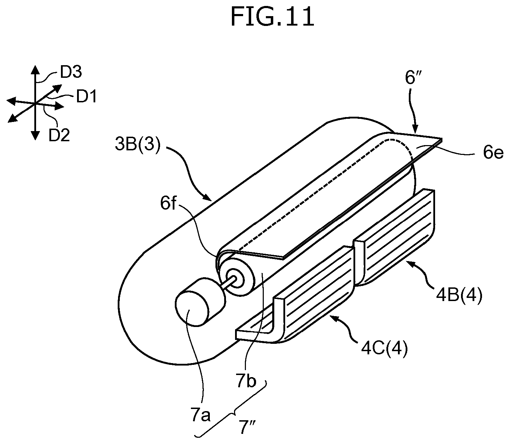

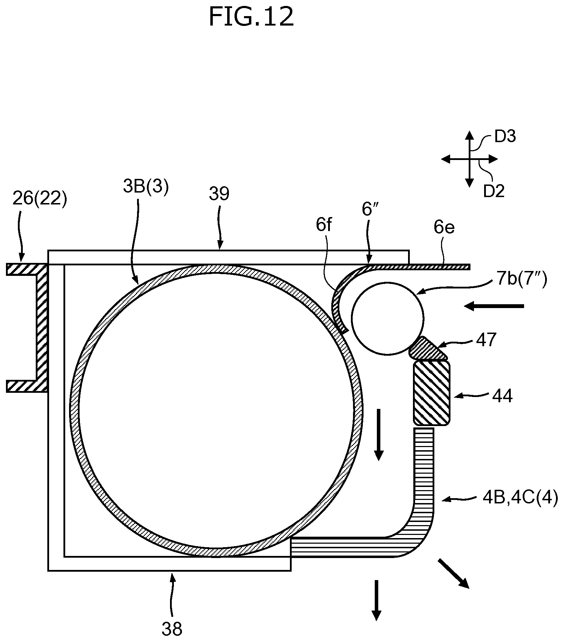

Hereinafter, referring to FIGS. 11 and 12, description will be made in relation to the heat exchanger 4 (the second radiator 4B and the third radiator 4C) and the outside air guide 5 on the side of the second tank 3B. As illustrated in FIG. 11, the second radiator 4B and the third radiator 4C of the present embodiment each have a shape whose cross section is curved in an L-shape, and are each disposed in a posture that two ends of the L-shaped cross-section direct inside in the vehicle width direction D2 and upward. This example illustrates the second radiator 4B and the third radiator 4C arranged side by side in the vehicle length direction D1. The second radiator 4B and the third radiator 4C are preferably provided in contact with the outer face of the second tank 3B from outside in the vehicle width direction D2 without a gap.

Meanwhile, the casing 6" of the present embodiment is in a thin plate shape, and functions as a baffle. The casing 6" illustrated in FIGS. 11 and 12 includes: a flat part 6e in a flat plate shape and disposed along the vehicle length direction D1 and the vehicle width direction D2; and a bent part 6f in a partial cylindrical shape and attached to the outer face of the second tank 3B, and the cross section thereof forms a J-shape.

The casing 6" receives the outside air flowing from outside in the vehicle width direction D2 and guides the outside air downward so as to guide the outside air to a space between the second radiator 4B and the second tank 3B, and a space between the third radiator 4C and the second tank 3B. Therefore, it can be regarded that also the casing 6" of the present embodiment forms the passage of the outside air between the heat exchanger 4 and the hydrogen gas reservoir 3. It should be noted that the casing 6" may be airtightly fitted to the outer face of the second tank 3B via the rubber 51 described in the first embodiment.

The fans 7" of the present embodiment are the type of fans used in general household air conditioners, are referred to as cross flow fans or tangential fans, and produce air flow perpendicular to a rotational axis. Each of the fans 7" has a motor part 7a in a cylindrical shape and a rotor part 7b in a cylindrical shape radially smaller and axially larger as compared to the motor part 7a. The motor part 7a and the rotor part 7b are disposed coaxially and connected to each other.

The fan 7" is mounted in a posture that the axial direction of the motor part 7a and the rotor part 7b coincides with the vehicle length direction D1. In addition, the motor part 7a is disposed adjacently to the hemispherical portion of the second tank 3B, and the rotor part 7b is disposed in a space surrounded by the bent part 6f of the casing 6". By driving the motor part 7a, the fan 7" causes the outside air flowing into the rotor part 7b from outside in the vehicle width direction D2 to flow downward through the rotor part 7b.

As illustrated in FIG. 12, the casing 6" of the present embodiment is supported by the stay 39 that fixes the second tank 3B to the chassis frame 22. On the outside in the vehicle width direction D2 of the second tank 3B, disposed is the side crash guard 44. The side crash guard 44 of the present embodiment locates below the fan 7" and above the second radiator 4B and the third radiator 4C. On an upper face of the side crash guard 44, installed is a baffler 47 that fills a gap between the rotor part 7b of the fan 7" and the side crash guard 44 to optimize the flow of the outside air. FIG. 12, and FIGS. 13 and 14 to be described later each illustrate a cross section of the rotor part 7b of the fan 7" in a simplified manner.

Although this embodiment omits illustration, the brace 8 described in the second embodiment may be added between the second tank 3B and the side crash guard 44. When the brace 8 is added to the structure of the present embodiment, the brace 8 is provided with a circular through-hole for avoiding interference with the fan 7". Also in the present embodiment, the second radiator 4B and the third radiator 4C may be supported by the mount 38 that fixes the second tank 3B to the chassis frame 22.

As illustrated by thick arrows in FIG. 12, by the effect of the casing 6" and the fan 7", the outside air flows downward after flowing into the rotor part 7b from outside in the vehicle width direction D2, and then, travels downward along the outer face of the second tank 3B to pass through the second radiator 4B and the third radiator 4C. As such, the outside air flows downward from outside in the vehicle width direction D2 to be discharged out of the vehicle 2.

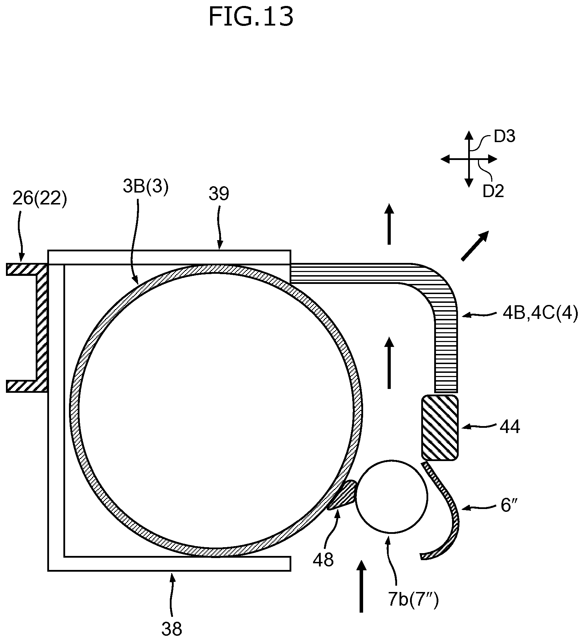

However, the flow direction of the outside air is not limited to the above example. As illustrated in FIG. 13, the casing 6" and the fan 7" may be installed below the side crash guard 44 and the heat exchanger 4 may be installed on or above the side crash guard 44 so as to cause the outside air to flow upward from below. In this case, by driving the motor part 7a, the fan 7" causes the outside air flowing into the rotor part 7b from below to flow upward through the rotor part 7b.

The second radiator 4B and the third radiator 4C of a first modification illustrated in FIG. 13 are each arranged in a posture that two ends of the L-shaped cross section direct inward in the vehicle width direction D2 and downward. Further, the casing 6" of this modification is disposed so as to surround the fan 7" from outside in the vehicle width direction D2. The casing 6" prevents outward deviation in the vehicle width direction D2 of the outside air flowing from below, and thereby, guides the outside air toward the space between the second radiator 4B and the second tank 3B, and the space between the third radiator 4C and the second tank 3B. On the outer face of the second tank 3B, disposed is a baffler 48 that fills a gap between the rotor part 7b of the fan 7" and the second tank 3B to optimize the flow of the outside air.

As illustrated by thick arrows in FIG. 13, by the effect of the fan 7" and the casing 6", the outside air flows upward after flowing into the rotor part 7b from below, and then, travels upward along the outer face of the second tank 3B to pass through the second radiator 4B and the third radiator 4C. As such, in this modification, the outside air flows upward from below to be discharged out of the vehicle 2.

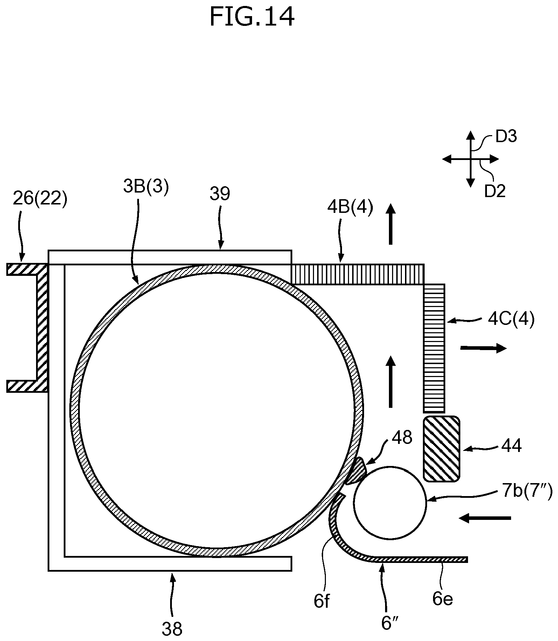

As illustrated in FIG. 14, the casing 6" may be installed below the side crash guard 44 so as to guide the outside air flowing from outside in the vehicle width direction D2 upward. In this case, by driving the motor part 7a, the fan 7" causes the outside air flowing into the rotor part 7b from outside in the vehicle width direction D2 to flow upward through the rotor part 7b. The second radiator 4B and the third radiator 4C may both be formed in a thin box shape and arranged perpendicular to each other so as to form an L-shape.

In a second modification illustrated in FIG. 14, the second radiator 4B is disposed along the vehicle width direction D2 and the vehicle length direction D1, and the third radiator 4C is disposed along the vehicle height direction D3 and the vehicle length direction D1. Further, the casing 6" of this modification is disposed so as to surround the fan 7" from below and has the bent part 6f attached to the outer face of the second tank 3B. The casing 6" receives the outside air flowing from outside in the vehicle width direction D2 and guides the outside air upward so as to guide the outside air to the space between the second radiator 4B and the second tank 3B, and the space between the third radiator 4C and the second tank 3B. Incidentally, on the outer face of the second tank 3B, disposed above the casing 6" is the baffler 48 that fills the gap between the rotor part 7b of the fan 7" and the second tank 3B to optimize the flow of the outside air.

As illustrated by thick arrows in FIG. 14, by the effect of the fan 7" and the casing 6", the outside air flows upward after flowing into the rotor part 7b from outside in the vehicle width direction D2, and then, travels upward along the outer face of the second tank 3B to pass through the second radiator 4B and the third radiator 4C. As such, in this modification, the outside air flows upward from outside in the vehicle width direction D2 to be discharged out of the vehicle 2.

### --3-2. Actions and Effects--

According to the cooling device 1" of the present embodiment, since the fan 7", which is the cross flow fan, is provided along the hydrogen gas reservoir 3, the dimension of the fan 7" can be easily adjusted to the dimension of the hydrogen gas reservoir 3. Therefore, even when the length in the vehicle length direction D1 of the hydrogen gas reservoir 3 varies, it is easy to install the fan 7" that has a suitable dimension for the hydrogen gas reservoir 3.

Since the heat exchanger 4 and the fan 7" is disposed offset from each other in the vehicle height direction D3, as compared with a case where the heat exchanger 4 and the fan 7" are arranged side by side in the vehicle width direction D2 at the same heights in the vehicle height direction D3, the heat exchanger 4 and the fan 7" can be compactly mounted in the vehicle width direction D2. This makes it easy to secure a space for the side crash guard 44. If the side crash guard 44 is installed outside in the vehicle width direction D2 of the hydrogen gas reservoir 3, crash resistance in the event of side collision can be increased.

According to the heat exchanger 4 in the shape whose cross section is curved in an L-shape, while securing the area of the face through which the outside air passes, the heat exchanger 4 can be compactly mounted. Similar actions and effects can be obtained also by the heat exchanger 4 including the two radiators (for example, the second radiator 4B and the third radiator 4C) arranged perpendicular to each other so as to form an L-shape.

If the motor part 7a which is radially larger than the rotor part 7b in the fan 7" is disposed adjacently to the hemispherical portion of the hydrogen gas reservoir 3, as compared with a case where the motor part 7a is disposed adjacently to the cylindrical portion of the hydrogen gas reservoir 3, the motor part 7a can be suppressed from projecting in the vehicle width direction D2. Therefore, while saving the space of the cooling device 1" in the vehicle width direction D2, the mounting space for the fan 7" can be secured.

In addition, according to the cooling device 1" of the present embodiment, the same actions and effects can be obtained from the same configurations as those of the cooling devices 1 and 1' of the first and second embodiments.

### --4. Modifications--

Each configuration of the above-described cooling devices 1, 1', and 1" is an example. The cooling device only needs to include at least the hydrogen gas reservoir 3 and the heat exchanger 4, and the outside air guide 5 may be omitted. The number of tanks 3A, 3B included in the hydrogen gas reservoir 3 and the number of radiators 4A, 4B, 4C included in the heat exchanger 4 are not particularly limited.

The arrangements of the hydrogen gas reservoir 3 and the heat exchanger 4 are not limited to the above example. For instance, three radiators included in the heat exchanger 4 may be installed along one tank that serves as the hydrogen gas reservoir 3. Alternatively, three radiators included in the heat exchanger 4 may be installed along three tanks included in the hydrogen gas reservoir 3, respectively. Incidentally, only the fuel cell 23 needs to be included in the cooling target of the coolant with which heat is exchanged in the heat exchanger 4.

The configuration of the outside air guide 5 described above is also an example. The outside air guide 5 may include either one of the casing and the fan, or may include a configuration other than the casing or the fan. The shape of the casing, and the type and location of the fan are not limited to the above examples, and can be modified as appropriate.

The radiator included in the heat exchanger 4 may include therein multiple passages independent of each other. For example, one radiator may have two types of passages consisting of a passage through which a relatively hot coolant flows and a passage through which a relatively cold coolant flows.

The configuration of the vehicle 2 described above is an example. The respective vehicles 2 of the first embodiment and the third embodiment may be provided with the pedestrian guard 10 described in the second embodiment in place of the side crash guard 44 described above. Further, the pedestrian guard 10 illustrated in FIG. 9 is an example. The pedestrian guard 10 only needs to be formed so as to allow the outside air to flow into the heat exchanger 4.

### [Reference Signs List]

- 1,1',1": cooling device (cooling device for fuel cell vehicle)
- 2: vehicle (fuel cell vehicle)
- 3: hydrogen gas reservoir
- 3A: first tank (first hydrogen gas reservoir)
- 3B: second tank (second hydrogen gas reservoir)
- 4: heat exchanger
- 4A: first radiator (first heat exchanger)
- 4B: second radiator (second heat exchanger)
- 4C: third radiator (third heat exchanger)
- 5: outside air guide
- 6,6',6": casing
- 6A: body
- 6B: duct
- 6C: upper body
- 6D: lower body
- 6e: flat part
- 6f: bent part
- 7,7": fan
- 7a: motor part
- 7b: rotor part
- 8: brace
- 8a: cutout
- 10: pedestrian guard
- 11: hole
- 12: cylinder
- 13: frame
- 14: panel
- 21: cab
- 22: chassis frame
- 23: fuel cell
- 24: motor
- 25: high-voltage battery
- 26: side rail
- 27: cross member
- 28: FC auxiliary devices
- 29: E auxiliary devices
- 30: heater
- 31: DC/DC converter
- 32: axle
- 33: oil cooler
- 34: front wheel
- 35: rear wheel
- 36: mounted component
- 37: outer face
- 38: mount (bracket)
- 39: stay (bracket)
- 40: water cooling part
- 41: first coolant (coolant)
- 42: second coolant (coolant)
- 43: third coolant (coolant)
- 44: side crash guard
- 46: deflector
- 47: baffler
- 48: baffler
- 51: rubber
- 61: opening
- 62: opening
- 63: scoop
- 64: outlet
- D1: vehicle length direction (front and rear direction)
- D2: vehicle width direction (left and right direction)
- D3: vehicle height direction (up and down direction)

## Claims

1. A a fuel cell vehicle (2) that includes a cooling device (1), a cab (21) and a chassis frame (22) and that drives a motor (24) for traveling with electric power of a fuel cell (23), the cooling device (1) comprising:
a hydrogen gas reservoir (3) that is installed on a rear side of the cab (21) and outside in a vehicle width direction of the chassis frame (22), and that stores hydrogen gas to be supplied to the fuel cell (23); **characterized in that**
a heat exchanger (4) is installed outside in the vehicle width direction of the hydrogen gas reservoir (3) and along the hydrogen gas reservoir (3), and that exchanges heat between outside air and coolant configured to cool at least the fuel cell (23),
whereby
the heat exchanger (4) includes a first heat exchanger (4A) that exchanges heat between the outside air and first coolant configured to cool the fuel cell (23), a second heat exchanger (4B) that exchanges heat between the outside air and second coolant different from the first coolant and configured to cool a high-voltage battery (25) that stores electric power of the fuel cell (23).

2. The fuel cell vehicle (2) according to claim 1, comprising
an outside air guide (5), included in the cooling device (1), that introduces the outside air to the heat exchanger (4).

3. The fuel cell vehicle (2) according to claim 2, wherein:
the heat exchanger (4) is disposed with a space from the hydrogen gas reservoir (3); and
the outside air guide (5) includes a casing (6) that forms a passage of the outside air between the hydrogen gas reservoir (3) and the heat exchanger (4).

4. The fuel cell vehicle (2) according to claim 2 or 3, wherein
the outside air guide (5) includes a fan (7) that generates a flow of the outside air that passes through the heat exchanger (4).

5. The fuel cell vehicle (2) according to any one of claims 1 to 4, wherein:
the hydrogen gas reservoir (3) includes a first hydrogen gas reservoir (3A) provided outside in the vehicle width direction of a first one of a pair of side rails (26) each extending in a vehicle length direction in the chassis frame (22) forming a ladder frame structure, and a second hydrogen gas reservoir (3B) provided outside in the vehicle width direction of a second one of the pair of side rails (26);
the first heat exchanger (4A) is installed outside in the vehicle width direction of the first hydrogen gas reservoir (3A) and along the first hydrogen gas reservoir (3A); and
the second heat exchanger (4B) is installed outside in the vehicle width direction of the second hydrogen gas reservoir (3B) and along the second hydrogen gas reservoir (3B).

6. The fuel cell vehicle (2) according to any one of claims 1 to 5, wherein
the heat exchanger (4) includes a third heat exchanger (4C) that exchanges heat between the outside air and third coolant different from the first coolant and the second coolant and used for cooling the motor (24).

7. The fuel cell vehicle (2) according to claim 6 depending on claim 5, wherein
the third heat exchanger (4C) is installed outside in the vehicle width direction of the second hydrogen gas reservoir (3B) and along the second hydrogen gas reservoir (3B).

8. The fuel cell vehicle (2) according to any one of claims 1 to 7, wherein
the heat exchanger (4) is supported by a bracket (38,39) that fixes the hydrogen gas reservoir to the chassis frame (22).

## Patentansprüche

1. Brennstoffzellenfahrzeug (2), das eine Kühlvorrichtung (1), eine Kabine (21) und einen Fahrgestellrahmen (22) umfasst und das einen Motor (24) zum Fahren mit elektrischer Leistung einer Brennstoffzelle (23) antreibt, wobei die Kühlvorrichtung (1) umfasst:
ein Wasserstoffgasreservoir (3), das an einer Rückseite der Kabine (21) und in einer Fahrzeugbreitenrichtung außerhalb des Fahrgestellrahmens (22) installiert ist und das zur Brennstoffzelle (23) zuzuführendes Wasserstoffgas speichert;
**dadurch gekennzeichnet, dass**
ein Wärmetauscher (4) in der Fahrzeugbreitenrichtung außerhalb des Wasserstoffgasreservoirs (3) und entlang des Wasserstoffgasreservoirs (3) installiert ist, der Wärme zwischen Außenluft und Kühlmittel, das dazu eingerichtet ist, zumindest die Brennstoffzelle (23) zu kühlen, austauscht,
wobei der Wärmetauscher (4) einen ersten Wärmetauscher (4A), der Wärme zwischen der Außenluft und einem ersten Kühlmittel austauscht, das dazu eingerichtet ist, die Brennstoffzelle (23) zu kühlen, einen zweiten Wärmetauscher (4B), der Wärme zwischen der Außenluft und einem zweiten Kühlmittel austauscht, das vom ersten Kühlmittel verschieden ist und dazu eingerichtet ist, eine Hochspannungsbatterie (25) zu kühlen, die elektrische Leistung der Brennstoffzelle (23) speichert, umfasst.

2. Brennstoffzellenfahrzeug (2) nach Anspruch 1, das umfasst
eine Außenluftführung (5), die in der Kühlvorrichtung (1) enthalten ist, die die Außenluft in den Wärmetauscher (4) einführt.

3. Brennstoffzellenfahrzeug (2) nach Anspruch 2, wobei:
der Wärmetauscher (4) mit einem Raum vom Wasserstoffgasreservoir (3) angeordnet ist; und
die Außenluftführung (5) ein Gehäuse (6) umfasst, das einen Durchgang der Außenluft zwischen dem Wasserstoffgasreservoir (3) und dem Wärmetauscher (4) bildet.

4. Brennstoffzellenfahrzeug (2) nach Anspruch 2 oder 3, wobei
die Außenluftführung (5) ein Gebläse (7) umfasst, das eine Strömung der Außenluft erzeugt, die durch den Wärmetauscher (4) hindurchtritt.

5. Brennstoffzellenfahrzeug (2) nach einem der Ansprüche 1 bis 4, wobei:
das Wasserstoffgasreservoir (3) ein erstes Wasserstoffgasreservoir (3A), das in der Fahrzeugbreitenrichtung außerhalb einer ersten eines Paars von Seitenschienen (26) vorgesehen ist, die sich jeweils in einer Fahrzeuglängsrichtung im Fahrgestellrahmen (22) erstrecken, die eine Leiterrahmenstruktur bilden, und ein zweites Wasserstoffgasreservoir (3B), das in der Fahrzeugbreitenrichtung außerhalb einer zweiten des Paars von Seitenschienen (26) vorgesehen ist, umfasst;
der erste Wärmetauscher (4A) in der Fahrzeugbreitenrichtung außerhalb des ersten Wasserstoffgasreservoirs (3A) und entlang des ersten Wasserstoffgasreservoirs (3A) installiert ist; und
der zweite Wärmetauscher (4B) in der Fahrzeugbreitenrichtung außerhalb des zweiten Wasserstoffgasreservoirs (3B) und entlang des zweiten Wasserstoffgasreservoirs (3B) installiert ist.

6. Brennstoffzellenfahrzeug (2) nach einem der Ansprüche 1 bis 5, wobei
der Wärmetauscher (4) einen dritten Wärmetauscher (4C) umfasst, der Wärme zwischen der Außenluft und einem dritten Kühlmittel austauscht, das vom ersten Kühlmittel und vom zweiten Kühlmittel verschieden ist und zum Kühlen des Motors (24) verwendet wird.

7. Brennstoffzellenfahrzeug (2) nach Anspruch 6 in Abhängigkeit von Anspruch 5, wobei
der dritte Wärmetauscher (4C) in der Fahrzeugbreitenrichtung außerhalb des zweiten Wasserstoffgasreservoirs (3B) und entlang des zweiten Wasserstoffgasreservoirs (3B) installiert ist.

8. Brennstoffzellenfahrzeug (2) nach einem der Ansprüche 1 bis 7, wobei
der Wärmetauscher (4) durch einen Halter (38, 39) abgestützt ist, der das Wasserstoffgasreservoir am Fahrgestellrahmen (22) fixiert.

## Revendications

1. Véhicule à pile à combustible (2) qui inclut un dispositif de refroidissement (1), une cabine (21) et une armature de châssis (22) et qui entraîne un moteur (24) pour se déplacer avec l'énergie électrique d'une pile à combustible (23), le dispositif de refroidissement (1) comportant :
un réservoir d'hydrogène gazeux (3) qui est installé sur un côté arrière de la cabine (21) et à l'extérieur, dans une direction de largeur de véhicule, de l'armature de châssis (22) et qui stocke l'hydrogène gazeux à fournir à la pile à combustible (23) ; **caractérisé en ce que**
un échangeur de chaleur (4) est installé à l'extérieur, dans la direction de largeur de véhicule du réservoir d'hydrogène gazeux (3) et le long du réservoir d'hydrogène gazeux (3), et qui échange de la chaleur entre de l'air extérieur et un liquide de refroidissement configuré pour refroidir au moins la pile à combustible (23),
en sorte que l'échangeur de chaleur (4) inclut un premier échangeur de chaleur (4A) qui échange de la chaleur entre l'air extérieur et un premier liquide de refroidissement configuré pour refroidir la pile à combustible (23), un deuxième échangeur de chaleur (4B) qui échange de la chaleur entre l'air extérieur et un deuxième liquide de refroidissement différent du premier liquide de refroidissement et configuré pour refroidir une batterie à tension élevée (25) qui stocke l'énergie électrique de la pile à combustible (23).

2. Véhicule à pile à combustible (2) selon la revendication 1, comportant
un guide d'air extérieur (5), inclus dans le dispositif de refroidissement (1), qui introduit l'air extérieur dans l'échangeur de chaleur (4).

3. Véhicule à pile à combustible (2) selon la revendication 2, dans lequel :
l'échangeur de chaleur (4) est disposé avec un espace par rapport au réservoir d'hydrogène gazeux (3) ; et
le guide d'air extérieur (5) inclut un caisson (6) qui forme un passage de l'air extérieur entre le réservoir d'hydrogène gazeux (3) et l'échangeur de chaleur (4).

4. Véhicule à pile à combustible (2) selon la revendication 2 ou 3, dans lequel
le guide d'air extérieur (5) inclut un ventilateur (7) qui génère un écoulement de l'air extérieur qui passe à travers l'échangeur de chaleur (4).

5. Véhicule à pile à combustible (2) selon l'une quelconque des revendications 1 à 4, dans lequel :
le réservoir d'hydrogène gazeux (3) inclut un premier réservoir d'hydrogène gazeux (3A) disposé à l'extérieur, dans la direction de largeur de véhicule, d'un premier longeron parmi une paire de longerons (26) s'étendant chacun, dans une direction de longueur de véhicule, dans l'armature de châssis (22) formant une structure de châssis en échelle, et un second réservoir d'hydrogène gazeux (3B) agencé à l'extérieur, dans la direction de largeur de véhicule, d'un second longeron de la paire de longerons (26) ;
le premier échangeur de chaleur (4A) est installé à l'extérieur, dans la direction de largeur de véhicule, du premier réservoir d'hydrogène gazeux (3A) et le long du premier réservoir d'hydrogène gazeux (3A) ; et
le deuxième échangeur de chaleur (4B) est installé à l'extérieur, dans la direction de largeur de véhicule, du second réservoir d'hydrogène gazeux (3B) et le long du second réservoir d'hydrogène gazeux (3B).

6. Véhicule à pile à combustible (2) selon l'une quelconque des revendications 1 à 5, dans lequel
l'échangeur de chaleur (4) inclut un troisième échangeur de chaleur (4C) qui échange de la chaleur entre l'air extérieur et un troisième liquide de refroidissement différent du premier liquide de refroidissement et du deuxième liquide de refroidissement et utilisé pour refroidir le moteur (24).

7. Véhicule à pile à combustible (2) selon la revendication 6 dépendante de la revendication 5, dans lequel
le troisième échangeur de chaleur (4C) est installé à l'extérieur, dans la direction de largeur de véhicule, du second réservoir d'hydrogène gazeux (3B) et le long du second réservoir d'hydrogène gazeux (3B).

8. Véhicule à pile à combustible (2) selon l'une quelconque des revendications 1 à 7, dans lequel
l'échangeur de chaleur (4) est supporté par un support (38, 39) qui fixe le réservoir d'hydrogène gazeux à l'armature de châssis (22).
